# EUROPEAN PATENT APPLICATION

(11) **EP 2 129 078 A1**
(43) Date of publication of application: **02.12.2009**
(21) Application number: 09251124.5
(22) Date of filing: 17.04.2009
(51) Int. Cl.: H04L 29/06, H04L 12/46, H04L 29/08, H04L 29/12

(54) **Proxy-based two-way web-service router gateway**

(30) Priority: 27.05.2008 US 56261 P; 19.02.2009 US 389197
(71) Applicant: Avaya Inc., Basking Ridge, New Jersey 07920 (US)
(72) Inventor: Chou, Wu, Basking Ridge, NJ 07920 (US); Fazal, Lookman, Franklin Park, NJ 08823 (US); Guo, Weiping, Piscataway, NJ 08854 (US); Liu, Feng, Hillsborough, NJ 08844 (US); Zhao, Zhi Qiang, Bridgewater, NJ 08807 (US)
(74) Representative: Williams, David John

(57) **Abstract**

A system for providing two-way Web services is disclosed that enables the client (121) and server (122) to be in different enterprise domains (110) - behind firewalls (111) - with few or no changes to the firewalls. In accordance with the illustrative embodiment, a "tunnel hub" (112) is deployed in the public domain and "tunnel gateways" (113) are deployed behind the firewalls where the clients request two-way services and the servers provide two-way services. Each tunnel gateway initiates a secure tunnel (131) out through the firewall to the target hub. Thereafter, a request for service enters the tunnel gateway, travels to the tunnel hub and to the appropriate tunnel gateway where the server is that provides the service. When the server provides the service, it enters the tunnel gateway, travels to the tunnel hub and to the appropriate tunnel gateway where the client is that requested the service.

## Description

This application claims the benefit of U.S. Provisional Application Serial Number 61/056,261, filed 05/27/2008, which is incorporated by reference in its entirety.

The present invention relates to telecommunications in general, and, more particularly, to the provisioning of two-way Web services.

Remote service access and distributed service integration are critical for c communications-enabled business processes ("CEBP"), software as a service ("SaaS"), and distributed service-oriented architectures ("SOA") solutions. Without it, web services applications and SOA solutions will be confined by the enterprise domains of network-address-translation/firewalls.

One widely used approach to solve this problem requires enterprises to change and open their network network-address-translation/Firewall configuration to make their web services endpoints publicly accessible, as they often do for the scenario of one-way web services. However, for two-way web services, it requires exposing both the service provider and service consumers to the external public network. This carries tremendous risk to both service provider and service consumers. Since enterprise security architecture can be very sophisticated, and even it is feasible with extraordinary effort, it is not preferred by enterprise IT. Most importantly, it cannot support the dynamic nature of communications-enabled business processes where many services will be added or deleted at an on-demand basis.

In addition, exposing a service to public network usually takes very long time and goes through many levels of approval because of the potential risk. The work load and cost on enterprise IT to support dynamic communications-enabled business processes applications through constant network-address-translation/firewall re-configuration can become exorbitant as the number of services and applications grows.

On the other hand, some small/medium enterprises may not have the infrastructure and expertise to publicize their web services. Requiring those enterprises to make their applications publicly accessible will impose significant cost to them, and eventually prevent them from using these services or excluding these services from being part of the communications-enabled business processes solution. In many cases, client applications only want to receive the interested events from a specific source, and exposing event sinks to external networks is not only unnecessary, but also introduce security issues. In conclusion, the current approach is not suitable for hosted, managed, or on-demand services for two-way web services which are critical for communications-enabled business processes, distributed SOA and communication services

Another prior art to address this issue requires the enterprise to deploy virtual private network ("VPN") to connect disparate networks. However, VPN is very expensive and complex. Moreover, in many cases VPN is not suitable. For example, enterprises usually don't allow their partners, third parties or suppliers to access their internal enterprise networks directly through VPN.

Microsoft recently released its BizTalk Connectivity Services, which allows developers to create loosely coupled applications and to expose a service to the Internet from behind a firewall or network-address-translation (see http://connect.biztalk.net/ for detail). However, it is a platform and application dependent solution and requires the Windows platform with specific version of .Net framework. The exposed services are managed by Microsoft. It is not transparent to the application and only those applications using BizTalk's SDK can be accessed from external networks.

The present invention enables the provisioning of two-way Web services without some of the costs and disadvantages of techniques in the prior art. For example, the illustrative embodiment enables clients and servers that reside in different enterprise domains and behind different firewalls to request and receive two-way Web services with few or no changes to the firewall. This is particularly advantageous for communications-enabled business processes ("CEBP"), software as a service ("SaaS"), and distributed service-oriented architectures ("SOA") solutions.

In accordance with the illustrative embodiment, a "tunnel hub" is deployed in the public domain and "tunnel gateways" are deployed behind the firewalls where the clients request two-way services and the servers provide two-way services. Each tunnel gateway initiates a secure tunnel out through the firewall to the target hub. Thereafter, a request for service enters the tunnel gateway, travels to the tunnel hub and to the appropriate tunnel gateway where the server is that provides the service. When the server provides the service, it enters the tunnel gateway, travels to the tunnel hub and to the appropriate tunnel gateway where the client is that requested the service. Because all of the tunnels are initiated from behind the enterprise firewalls, the two-way web services can cross the firewalls with little or no changes to the enterprises's network-address-translation/firewall configurations.

Figure 1 depicts a schematic diagram of the salient components of the illustrative embodiment of the present invention.

Figure 2 depicts a schematic diagram of the salient components of tunnel gateway 123-*i*, wherein *i* ∈ {1, 2, 3}.

Figure 3 depicts a schematic diagram of the salient components of tunnel hub 112.

Figure 4 depicts a flowchart of the salient tasks associated with the operation of the illustrative embodiment.

Figure 5 depicts a flowchart of the salient tasks performed by the illustrative embodiment in the course of performing task 403 - establishing the network of tunnels.

Figure 6 depicts a flowchart of the salient tasks performed by the illustrative embodiment in the course of performing task 404 - requesting and receiving two-way services.

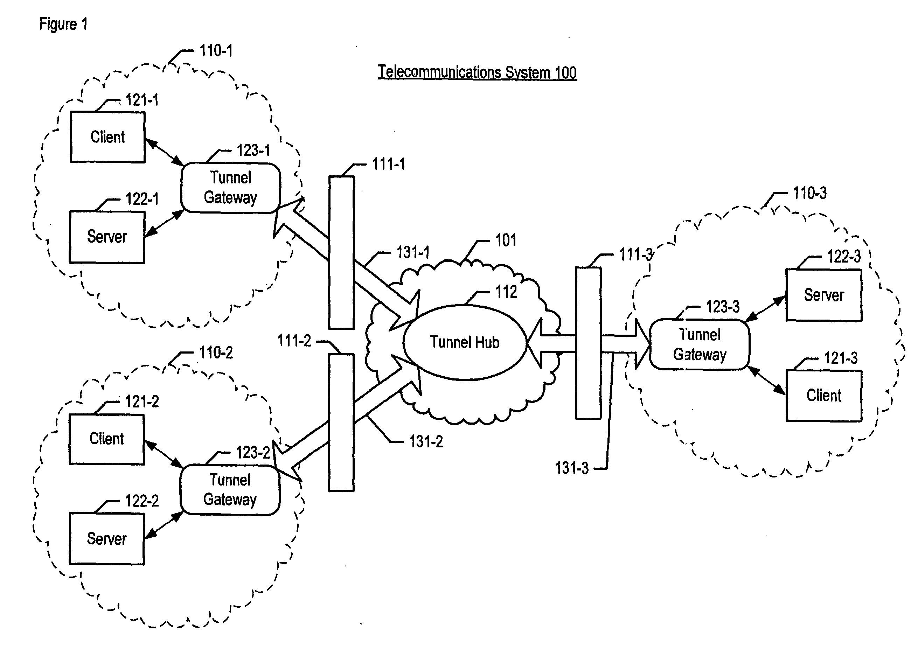

**Figure 1** depicts a schematic diagram of the salient components of the illustrative embodiment of the present invention. Telecommunications system 100 comprises: the Internet 101, enterprise computing domains 110-1 through 110-3, firewalls 111-1 through 111-3, tunnels 131-1 through 131-3, and tunnel hub 112, interconnected as shown. Although the illustrative embodiment comprises three enterprise domains, it will be clear to those skilled in the art, after reading this disclosure, how to make and use alternative embodiments of the present invention that comprise any number of enterprise domains.

The Internet 101 is the ubiquitous public data network that is well known to those skilled in the art. It will be clear to those skilled in the art, after reading this disclosure, how to make and use alternative embodiments of the present invention in which some or all of the domains are connected by a different network (*e*.*g*., the Public Switched Telephone Network, *etc*.).

Enterprise domain 110-*i*, wherein *i* ∈ {1, 2, 3}, comprises client 121-*i*, server 122-*i*, and tunnel gateway 123-*i*. Client 121-*i* comprises the hardware and software to request and accept a two-way service using tunnel gateway 123-*i* as a proxy. It will be clear to those skilled in the art how to make and use client 123-*i*. Server 122-*i* comprises the hardware and software to: (1) receive a request for a two-way service via tunnel gateway 123-*i* as a proxy, and (2) provide the two-way service as requested via tunnel gateway 123-*i* as a proxy. It will be clear to those skilled in the art how to make and use server 122-*i*. Tunnel gateway 123-*i* comprises the hardware and software to: (1) create tunnel 131-*i* through firewall 111-*i* and Internet 101 to tunnel hub 112, and (2) to act as a proxy for client 121-*i* and server 122-*i*. The architecture of tunnel gateway 123-*i* is described below and in the accompanying figure. The tasks performed by client 121-*i*, server 122-*i*, tunnel gateway 123-*i*, and tunnel hub 112 are described in detail below and in the accompanying figures.

Firewalls 111-1 through 111-3 comprise hardware and software to prevent hackers on the Internet 101 from accessing the resources within the enterprise domain that they protect. It will be clear to those skilled in the art how to make and use firewalls 111-1 through 111-3.

Tunnel hub 112 comprises hardware and software to: (1) establish secure tunnels with tunnel gateways 123-1 through 123-3, (2) route requests for service from client 121-*i* to server 122-*k*, *k* ∈ {1, 2, 3} and *i* ≠ *k*, and (3) route service from server 122-*k* back to client 121-*i*. The architecture of tunnel hub 112 and the tasks it performs are described in detail below and in the accompanying figures.

Although each enterprise domain in accordance with the illustrative embodiment comprises one client computer, one server computer, and one tunnel gateway, it will be clear to those skilled in the art, after reading this disclosure, how to make and use alternative embodiments of the present invention in which each domain comprises any number of client computers, server computers, and tunnel gateways.

In accordance with the illustrative embodiment, client 121-*i* can request a service from server 122-*j*, wherein *j* ∈ {1, 2, 3}. In accordance with the illustrative embodiment, the service is a "two-way" service, which for the purposes of this specification is defined as a service in which there is at least one communication initiated by a client and one communication initiated by a server computer. It will be clear to those skilled in the art, after reading this disclosure, how to make and use alternative embodiments of the present invention in which any of the client computers can request a "one-way" service from a server computer.

The illustrative embodiment is advantageous in that after tunnel gateway 123-*i* establishes a tunnel with tunnel hub 112, all service requests from client 121-*i* go through tunnel gateway 123-*i* and are routed to either: (1) server 122-*i* (within enterprise domain 110-*i*), or (2) to tunnel hub 112 to be forwarded to server 122-*k* (within enterprise domain 110-*k*). In this way, client 121-*i* uses tunnel gateway 123-*i* as a service proxy.

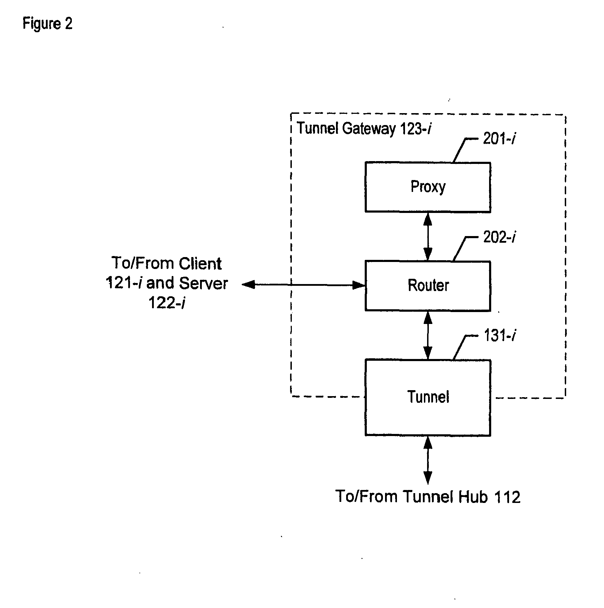

**Figure 2** depicts a schematic diagram of the salient components of tunnel gateway 123-*i*, wherein *i* ∈ {1, 2, 3}. Tunnel gateway 123-*i* comprises: proxy 201-*i*, router 202-*i*, and tunnel 131-*i*, interconnected as shown. It will be clear to those skilled in the art, after reading this disclosure, how to make and use tunnel gateway 123-*i*.

Tunnel gateway 123-*i* establishes tunnel 203-*i* with tunnel hub 112. All requests for two-way web services from the applications on client 121-*i* go through tunnel gateway 123-*i* and are routed to either tunnel hub 112 (when the server providing the service is in a different enterprise domain), or server 122-*i* (when the server providing the service is in the same enterprise domain). This enables the applications on client 121-*i* to configure and use tunnel gateway 123-*i* as a service proxy in well-known fashion.

From the perspective of client 121-*i*, tunnel gateway 123-*i* is a special web proxy for an application on client 121-*i*, and, as a proxy forwards the Simple Object Access Protocol ("SOAP") or Hypertext Transfer Protocol ("HTTP") requests to tunnel hub 112. From the perspective of service server 122-*i*, tunnel gateway 123-*i* is a special reverse-proxy that forwards all of the requests coming from tunnel hub 112 to the corresponding web services endpoints. One difference between tunnel gateway 123-*i* and a web proxy in the prior art is that, before doing any data exchange, the tunnel gateway establishes a tunnel (*e*.*g*., a persistent TCP connection, a secured TCP connection, etc.) from inside enterprise domain 110-*i* to tunnel hub 112. After the tunnel is successfully established, an application on client 121-*i* can tunnel gateway 123-*i* as a proxy to access web services that cross enterprise domains. Furthermore, server 122-*j* is able to initiate communication with the application on client 121-*i* via tunnel gateway 123-*j* and tunnel gateway 123-*i*. Thus, two-way web services communication is achieved even though clients and servers reside in different enterprise domains.

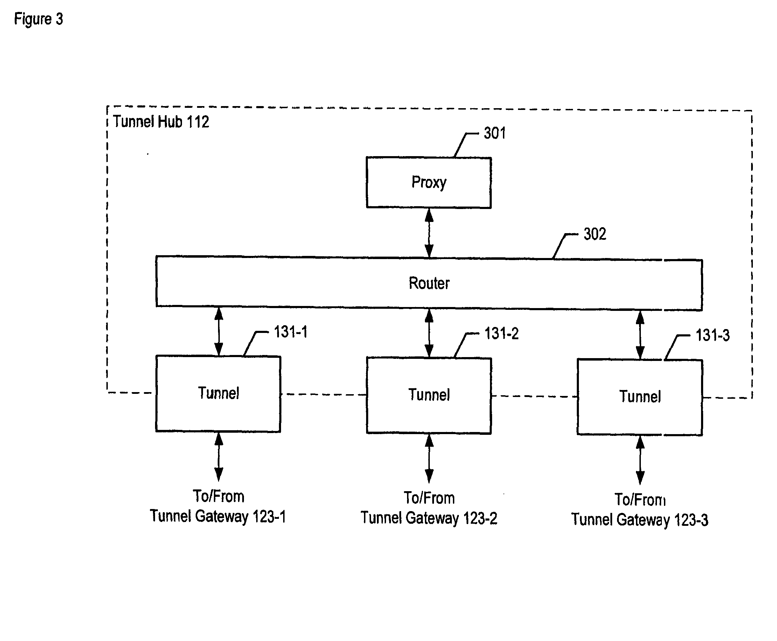

**Figure 3** depicts a schematic diagram of the salient components of tunnel hub 112. Tunnel hub 112 comprises: proxy 301, router 302, and tunnels 131-1 through 131-3, interconnected as shown. It will be clear to those skilled in the art, after reading this disclosure, how to make and use tunnel hub 112.

In accordance with the illustrative embodiment, tunnel hub 112 is deployed in the public domain so that tunnel gateway 123-*i* can access it without having to penetrate a firewall. When receiving a request from tunnel gateway 123-*i*, tunnel 303-*i* within tunnel hub 112 forwards it to router 302, which forwards the request to the appropriate tunnel gateway.

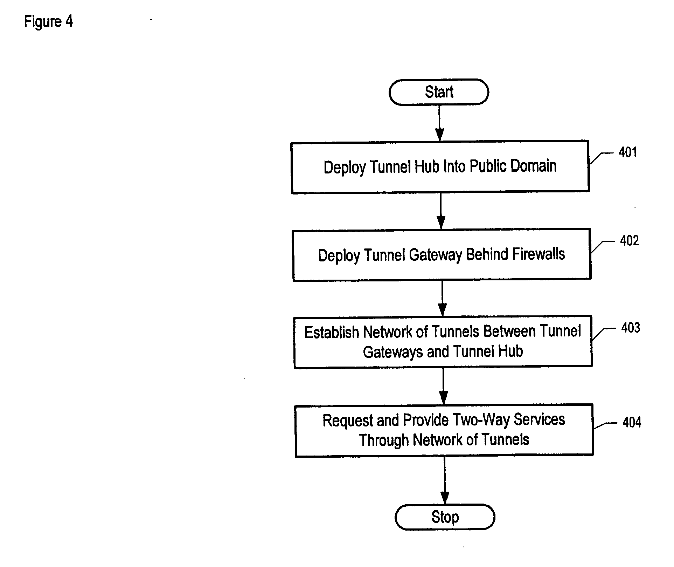

**Figure 4** depicts a flowchart of the salient tasks associated with the operation of the illustrative embodiment.

At task 401, tunnel hub 112 is deployed into the public domain. It will be clear to those skilled in the art, after reading this disclosure, how to perform task 401.

At task 402, tunnel gateways 121-1 through 121-3 are deployed into the appropriate enterprise domains. It will be clear to those skilled in the art, after reading this disclosure, how to perform task 402.

At task 403, tunnel gateways 121-1 through 121-3 initiate the establishment of the network of tunnels with tunnel hub 112. Task 403 is described in detail below and in the accompanying figure.

At task 404, clients 121-1 through 121-3 request and receive two-way services from server computers 122-1 through 122-3. Task 404 is described in detail below and in the accompanying figure.

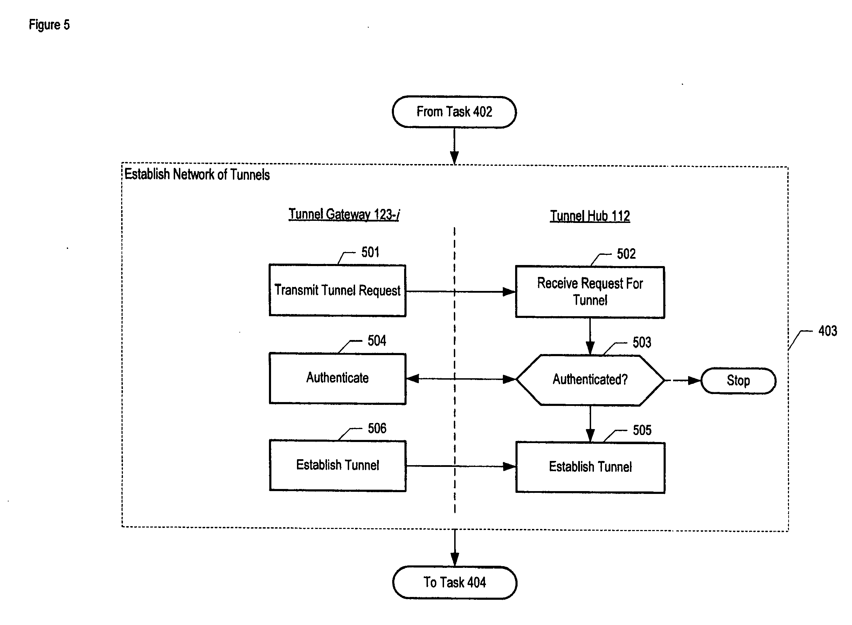

**Figure 5** depicts a flowchart of the salient tasks performed by the illustrative embodiment in the course of performing task 403 - establishing the network of tunnels.

At task 501, tunnel gateway 123-*i* transmits a tunnel request through firewall 131-*i* to tunnel hub 122. It will be clear to those skilled in the art, after reading this disclosure, how to perform task 501.

At task 502, tunnel hub 112 receives the tunnel request from tunnel gateway 123-*i*. It will be clear to those skilled in the art, after reading this disclosure, how to perform task 502.

At tasks 503 and 504, tunnel hub 112 authenticates tunnel gateway 123-*i* to ensure that tunnel gateway 123-*i* does, in fact, have the authority to access the services provided by server 122-*j*. When tunnel gateway 123-*i* is not authenticated, the process stops. Alternatively, when tunnel gateway 123-*i* is authenticated, the process proceeds to task 505. It will be clear to those skilled in the art, after reading this disclosure, how to perform tasks 503 and 504.

At tasks 505 and 506, tunnel hub 112 and tunnel gateway 123-*i* establish a tunnel. It will be clear to those skilled in the art, after reading this disclosure, how to perform tasks 505 and 506.

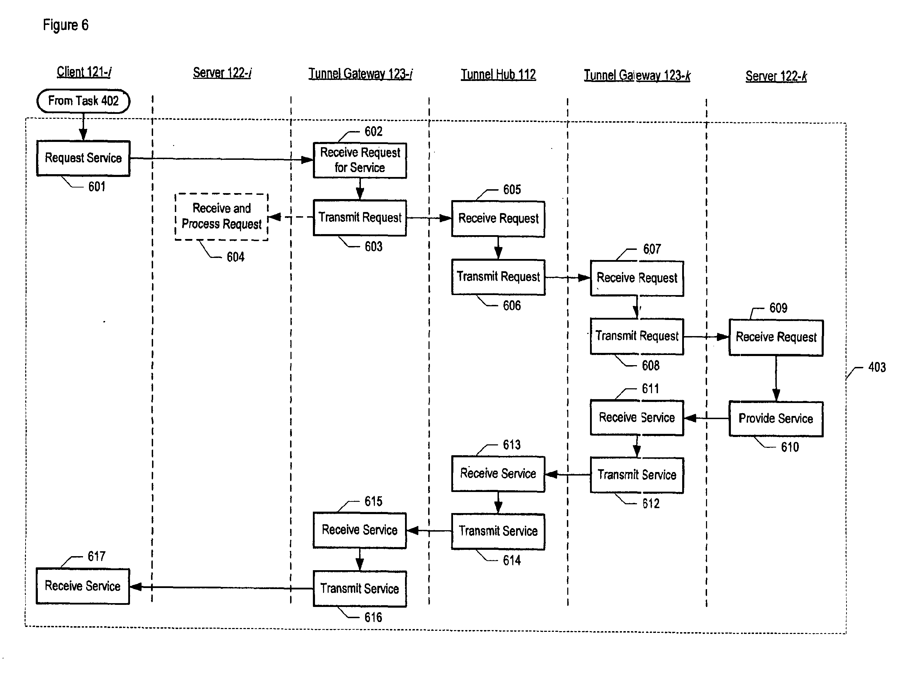

**Figure 6** depicts a flowchart of the salient tasks performed by the illustrative embodiment in the course of performing task 404 - requesting and receiving two-way services.

At task 601, client 121-*i* transmits a request for two-way service to tunnel gateway 123-*i*. It will be clear to those skilled in the art, after reading this disclosure, how to make and use embodiments of the present invention that perform task 601.

At task 602, tunnel gateway 123-*i* receives the request for two-way service from client 121-*i*. It will be clear to those skilled in the art, after reading this disclosure, how to make and use embodiments of the present invention that perform task 601.

At task 603, tunnel gateway 123-*i*, with the assistance of a lookup table that maps servers to services, transmits the request as appropriate. When the service is provided by server 122-*i*, which is within the same enterprise domain as client 121-*i*, then tunnel gateway 123-*i* transmits the request directly to server 122-*i* (in task 604) without involving tunnel hub 112. Thereafter, server 122-*i* and client 121-*i* interact through tunnel gateway 123-*i* without the involvement of tunnel hub 112. In contrast, when the requested services is provided by server 122-*j*, which is not within the same enterprise domain as client 121-*i*, then tunnel gateway transmits the request to tunnel hub 112. It will be clear to those skilled in the art, after reading this disclosure, how to make and use embodiments of the present invention that perform tasks 603 and 604.

At task 605, tunnel hub 112 receives the request from tunnel gateway 123-*i* via tunnel 131-*i*. It will be clear to those skilled in the art, after reading this disclosure, how to make and use embodiments of the present invention that perform task 605.

At task 606, tunnel hub 112, with the assistance of a lookup table that maps servers to services, transmits the request via tunnel 131-*k* to tunnel gateway 123-k. It will be clear to those skilled in the art, after reading this disclosure, how to make and use embodiments of the present invention that perform task 606.

At task 607, tunnel gateway 123-*k* receives the request via tunnel 131-*k*. It will be clear to those skilled in the art, after reading this disclosure, how to make and use embodiments of the present invention that perform task 607.

At task 608, tunnel gateway 123-*k*, with the assistance of a lookup table that maps servers to services, transmits the request to server 122-*k*. It will be clear to those skilled in the art, after reading this disclosure, how to make and use embodiments of the present invention that perform task 608.

At task 609, server 122-*k* receives the request for the service. It will be clear to those skilled in the art, after reading this disclosure, how to make and use embodiments of the present invention that perform task 609.

At task 610, server 122-*k* transmits the service to tunnel gateway 123-*k* for forwarding back to the client that requested the service. It will be clear to those skilled in the art, after reading this disclosure, how to make and use embodiments of the present invention that perform task 610.

At task 611, tunnel gateway 123-*k* receives the service. It will be clear to those skilled in the art, after reading this disclosure, how to make and use embodiments of the present invention that perform task 611.

At task 612, tunnel gateway 123-*k*, with the assistance of a lookup table that maps servers to services, transmits the service as appropriate. When the service is requested by client 121-*k*. which is within the same enterprise domain as server 122-*k* and tunnel gateway 123-*k*, tunnel gateway 123-k forwards the service to client 121-*k* without involving tunnel hub 112. In contrast, when the service is requested by client 121-*i*, tunnel gateway 123-*i* transmits the service to tunnel hub 112, via tunnel 131-*k*. It will be clear to those skilled in the art, after reading this disclosure, how to make and use embodiments of the present invention that perform task 612.

At task 613, tunnel hub 112 receives the service via tunnel 131-*k*. It will be clear to those skilled in the art, after reading this disclosure, how to make and use embodiments of the present invention that perform task 613.

At task 614, tunnel hub 112 transmits the service to tunnel gateway 123-*i* via tunnel 131-*i*. It will be clear to those skilled in the art, after reading this disclosure, how to make and use embodiments of the present invention that perform task 614.

At task 615, tunnel gateway 123-*i* receives the service. It will be clear to those skilled in the art, after reading this disclosure, how to make and use embodiments of the present invention that perform task 615.

At task 616, tunnel gateway 123-*i* transmits the service to client 121-*i*. It will be clear to those skilled in the art, after reading this disclosure, how to make and use embodiments of the present invention that perform task 616.

At task 617, client 121-*i* receives the service. It will be clear to those skilled in the art, after reading this disclosure, how to make and use embodiments of the present invention that perform task 617.

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A method comprising:
establishing a first tunnel from a first tunnel gateway in a first enterprise domain through a first firewall to a tunnel hub in the public domain; and
establishing a second tunnel from a second tunnel gateway in a second enterprise domain through a second firewall to the tunnel hub.

2. The method of claim 1 further comprising:
transmitting a request for a two-way web service from the first tunnel gateway to the tunnel hub and to the second tunnel gateway; and
transmitting a service, in response to the request, from the second tunnel gateway to the tunnel hub to the first tunnel gateway.

3. The method of claim 1or claim 2, further comprising establishing a third tunnel from a third tunnel gateway in a third enterprise domain through a third firewall to the tunnel hub.

4. The method of claim 3 further comprising:
transmitting a first request for a first two-way web service from the first tunnel gateway to the tunnel hub and to the second tunnel gateway;
transmitting a first service, in response to the first request, from the second tunnel gateway to the tunnel hub to the first tunnel gateway;
transmitting a second request for a second two-way web service from the first tunnel gateway to the tunnel hub and to the third tunnel gateway; and
transmitting a second service, in response to the second request, from the third tunnel gateway to the tunnel hub to the first tunnel gateway.
